Europäisches Patentamt

European Patent Office

Office européen des brevets

(11) Veröffentlichungsnummer: **0 194 709**
**A2**

# (12) EUROPÄISCHE PATENTANMELDUNG

(21) Anmeldenummer: **86200244.1**

(22) Anmeldetag: **19.02.86**

(51) Int. Cl.⁴: **H 04 M 1/274**

(30) Priorität: **23.02.85 DE 3506390**

(43) Veröffentlichungstag der Anmeldung:
**17.09.86 Patentblatt 86/38**

(84) Benannte Vertragsstaaten:
**DE FR GB IT SE**

(71) Anmelder: **Philips Patentverwaltung GmbH**
**Billstrasse 80**
**D-2000 Hamburg 28(DE)**

(84) Benannte Vertragsstaaten:
**DE**

(71) Anmelder: **N.V. Philips' Gloeilampenfabrieken**
**Groenewoudseweg 1**
**NL-5621 BA Eindhoven(NL)**

(84) Benannte Vertragsstaaten:
**FR GB IT SE**

(72) Erfinder: **Hirth, Peter, Dipl.-Ing.**
**Lammersstrasse 6**
**D-8520 Erlangen(DE)**

(72) Erfinder: **Grucza, Hubert**
**Friedrichstrasse 8**
**D-8500 Nürnberg 10(DE)**

(72) Erfinder: **Frerichs, Werner, Dipl.-Ing.**
**Kolpingstrasse 41**
**D-8501 Eckental/Forth(DE)**

(74) Vertreter: **Dreykorn-Lindner, Werner et al,**
**Philips Patentverwaltung GmbH Postfach 10 51 49**
**Billstrasse 80**
**D-2000 Hamburg 28(DE)**

(54) Verfahren und Schaltungsanordnung zur Einfügung von Wahlpausen zwischen gespeicherten Wahlziffern.

(57) Das Einfügen von Wahlpausen zwischen gespeicherten Wahlziffern erfolgt bei bekannten Verfahren entweder durch eine besondere Bedienungsprozedur oder unter Verwendung zusätzlicher Schaltmittel zur Messung der Pausenlänge, Zuordnung einer Pausenkennung und Abspeicherung der Pausenkennung. Zur Verkürzung gespeicherter Pausenlängen ist eine zusätzliche Wähltonerkennungsschaltung notwendig, mittels der nach einer Ziffernaussendung keine Wahlpause eingefügt wird.

Zur Verringerung des Speicheraufwands und zur Veränderung gespeicherter Wahlpausen werden bei einer Eingabe von Rufnummern mittels einer Wähleinrichtung in einem Referenzspeicher nur solche Rufnummern gespeichert, welche mindestens eine Zwischengefügte Wahlpause aufweisen. Bei einer Registerwahl wird mittels einer Steuereinrichtung wahlziffernweise überprüft, ob übereinstimmende Wahlziffernfolgen gespeichert sind und bei Feststellung einer Übereinstimmung wird von der Steuereinrichtung eine Wahlpause eingefügt. Durch den Vergleich der Zahl der Übereinstimmungen bezüglich Wählziffernfolge und Vergleich der gespeicherten Pausenlängen wird der Referenz-speicher an das Wahlverhalten des Benutzers angepaßt.

Croydon Printing Company Ltd

./...

FIG.1

-1-

Philips Patentverwaltung GmbH
N.V. Philips'Gloeilampenfabrieken          18.12.1985

Verfahren und Schaltungsanordnung zur Einfügung von Wahlpausen zwischen gespeicherten Wahlziffern

Die Erfindung betrifft ein Verfahren zur Einfügung von
Wahlpausen zwischen gespeicherten Wahlziffern gemäß dem
Oberbegriff des Patentanspruchs 1.

Sind Teilnehmerendstellen an Fernsprechnebenstellenanlagen angeschlossen, so muß häufig nach der Belegung der
Amtsleitung eine Unterbrechung der Weiterwahl folgen, bis
der Wählton anliegt. Diese Wahlpause muß auch dann eingefügt werden, wenn die Wahlinformation gespeichert und bei
Registerwahl wieder ausgelesen wird. Moderne Fernsprechapparate verfügen häufig über Tastwahleinrichtungen mittels welcher zuvor abgespeicherte längere Rufnummern
durch Drücken einer besonderen Taste abgerufen werden
können. Eine solche Registerwahl kommt bei den Leistungsmerkmalen Wahlwiederholung, Kurz-, Ziel-, Direkt- oder
Namenswahl vor.

Aus der DE-OS 29 40 490 ist ein automatischer Pausengenerator für Wähleinrichtungen bekannt, bei dem die über eine Tastatur eingegebene Wahlinformation in einem Rufnummern- und Amtskennzifferspeicher abgespeichert wird. Mittels einem Vergleicher wird beim Abrufen der Wahlinformation überprüft, ob die eingegebene Ziffer mit einer eingespeicherten Amtskennziffer identisch ist. Liegt eine
solche Übereinstimmung zwischen ausgesendeter Ziffer und
Amts- kennziffer vor, so wird nach dieser Ziffer ein Pausenkriterium durch den Rufnummernspeicher an den Ziffernpausengenerator gegeben, wodurch die Wahlpause zwischen
der Wahlziffernfolge eingefügt wird. Die Wahlpause weist eine feste Pausenlänge auf oder kann mittels einer zusätzlichen Wählerkennungsschaltung bei Eintreffen des Wähltones verkürzt werden.

Aus der DE-OS 24 26 690 ist ein automatischer Rufnummerngeber bekannt, bei dem bei der Eingabe einer Wahlinformation eine Pause zur Erkennung des Wahltons festgelegt wird, indem ein zusätzliches Codezeichen zwischen zwei Ziffern der Rufnummer eingegeben werden kann und mittels des zusätzlichen Codezeichens wird bei dessen Auftreten die Aussendung der gespeicherten Rufnummer gestoppt. Der Weiterlaufbefehl für die Aussendung der gespeicherten Rufnummer kann vom Teilnehmer manuell oder von einem mit der Teilnehmerleitung verbundenen Wähltonerkenner abgegeben werden.

Bei den vorgenannten Verfahren werden entweder Wahlpausen mit einer definierten Maximallänge eingegeben oder eine Wähltonerkennungsschaltung bestimmt den Zeitpunkt für die Weiterwahl. Bei einer Fehlbedienung durch den Benutzer oder bei der Umstellung einer Nebenstellenanlage kann nicht immer vermieden werden, daß eine Falschwahl auftritt. Weiterhin ist von Nachteil, daß nicht jeder Benutzer in der Lage ist eine Umprogrammierung vorzunehmen, so daß hierfür hohe Kosten anfallen können.

Weiterhin ist aus der DE-PS 24 01 276 eine Schaltungsanordnung für die Einspeicherung von wiederholt abrufbaren Rufnummern bekannt, bei welcher zeitabhängige Schaltmittel vorgesehen sind, die ansprechen, wenn bei der Zifferneingabe eine vorgegebene Mindestpause zwischen der Eingabe zweier Ziffern überschritten wird. Als zeitabhängige Schaltmittel können wiederholt triggerbare monostabile Kippstufen oder Zähler verwendet, werden deren Ausgangssignale einer Pausenkodiereinrichtung zugeführt werden. Die Pausenkodiereinrichtung stellt ein besonderes, nicht als Wahlinformation interpretierbares Kennzeichen zur Verlängerung der Wahlpausen zur Verfügung, welches in den Wahlziffern-Zwischenspeicher aufgenommen wird. Mittels einer solchen Schaltungsanordnung kann zwar auf einfache Art und Weise die Pausenlänge gemessen und auch verändert werden, diese Schaltungsanordnung erfordert jedoch einen zusätzlichen Aufwand für die zeitabhängigen Schaltmittel und einen hohen Speicheraufwand für den Wahlziffern-Zwischenspeicher, in welchem jede Rufnummer, bei deren Zifferneingabe die Mindestpause überschritten wird, gespeichert wird.

Der Erfindung liegt die Aufgabe zugrunde, ein Verfahren zur Einfügung von Wahlpausen zwischen gespeicherten Wahlziffern anzugeben, bei dem vom Benutzer bei der direkten Wahleingabe gemachte Wahlpausen automatisch gespeichert werden und bei dem beim Auslesen der gespeicherten Wahlziffern für das Einfügen der Wahlpause keine Wahltonerkennungsschaltung erforderlich ist.

Diese Aufgabe wird durch die Merkmale des Patentanspruchs 1 gelöst.

Das erfindungsgemäße Verfahren weist den Vorteil auf, daß ein in Tastwahlapparaten (Teilnehmerendstelle) vorhandener Mikroprozessor, welcher in ansich bekannter Weise Anzeigeeinrichtungen, Wähleinrichtungen, Speicher in Abhängigkeit von am Tastenfeld eingegebenen Bedienungsfunktionen steuert, für die Einfügung von Wahlpausen zwischen gespeicherten Wahlziffern mitverwendet wird. Eine besondere Bedienungsprozedur für die Einprogrammierung von Wahlpausen oder eine zusätzliche Schaltungsanordnung sind nicht erforderlich. Der Mikroprozessor (Steuereinrichtung) prüft während der Eingabe der Wahl, bei welchen Wahlfolgen und an welcher Stelle der Benutzer Wahlpausen einfügt und speichert diese in Referenzspeicher ab. Da dies bei jeder direkten Wahleingabe wiederholt wird, werden übereinstimmende Wahlziffernfolgen nicht jedes mal neu abgespeichert.

Das Verfahren gemäß Patentanspruch 2 weist den Vorteil auf, daß durch das Gewichten jeder im Referenzspeicher aufgenommenen Rufnummer ein Kriterium vorliegt, anhand dessen die Entscheidung getroffen werden kann, welche im Referenzspeicher aufgenommene Rufnummer bei einer Neueingabe gelöscht werden kann. Wird beispielsweise die Nebenstellenanlage umgestellt, so können im Referenzspeicher aufgenommenen Rufnummern auf einfache Art und Weise gelöscht, werden indem neu im Referenzspeicher aufgenommenen Rufnummern eine höhere Gewichtung zugeordnet wird.

Das Verfahren gemäß Patentanspruch 4 weist den Vorteil auf, daß auf einfache Art und Weise auch die Pausenlänge korrigiert werden kann. Hat der Benutzer bei der Neueingabe einer Rufnummer eine Pause von beispielsweise sechs Sekunden gemacht und gibt er bei nachfolgenden Eingaben kürzere Wählpausen vor, so wird die gespeicherte Pausenlänge korrigiert, indem gemäß Patentanspruch 6 die Pausenlänge stufenweise verkürzt wird.

Eine Ausführungsform der Erfindung wird im folgenden näher beschrieben und erläutert. Es zeigt:

Fig. 1   die beim erfindungsgemäßen Verfahren verwendeten Einrichtungen in einer Teilnehmerendstelle und

Fig. 2   ein Ablaufdiagramm für die Pausenerkennung beim erfindungsgemäßen Verfahren.

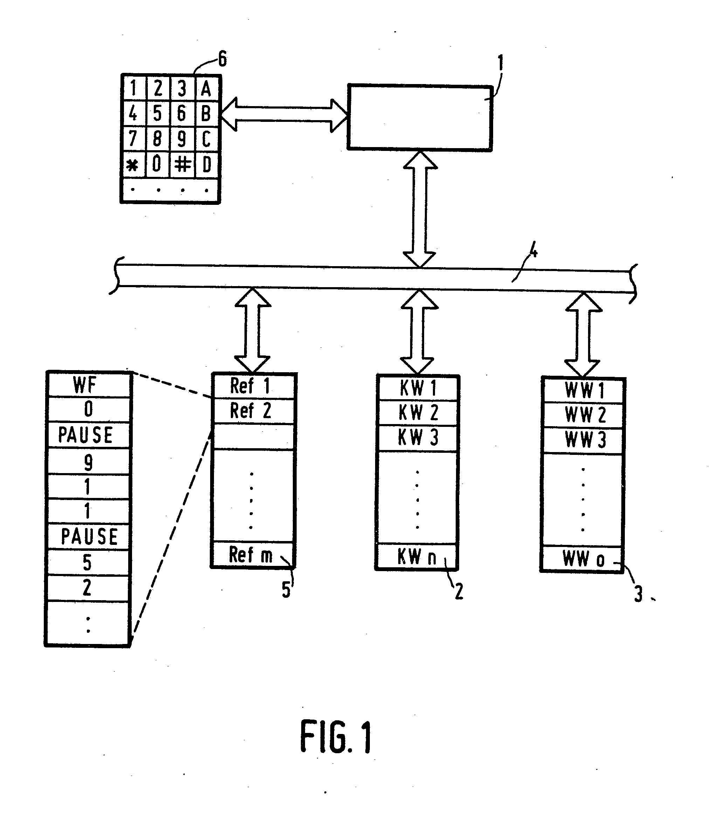

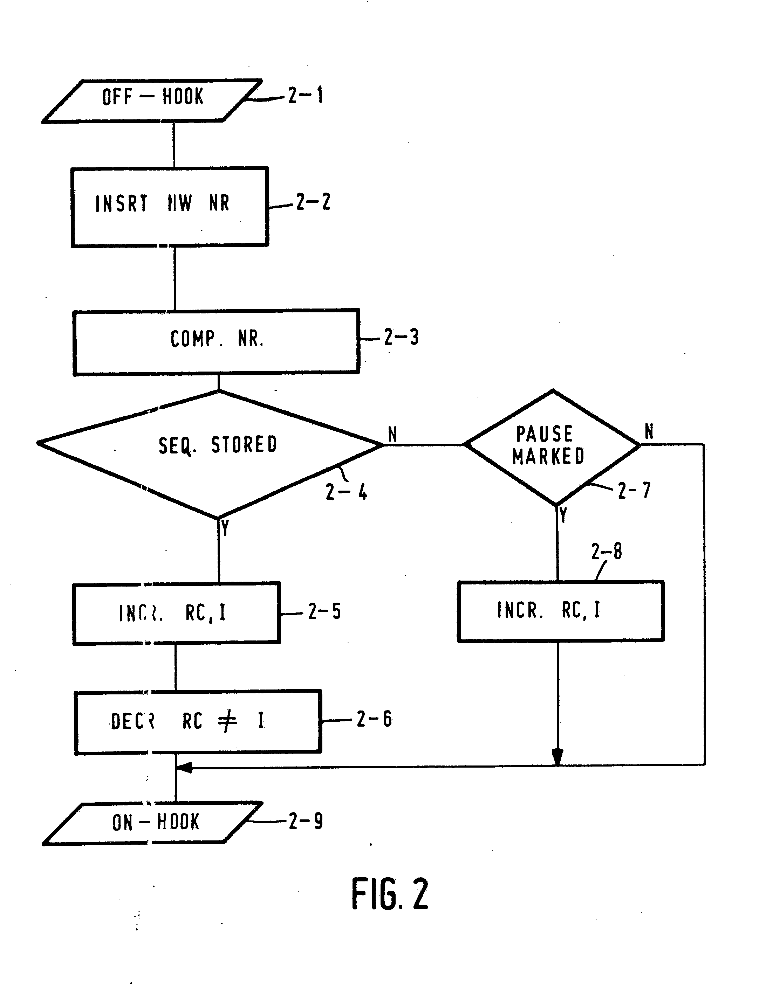

Die Teilnehmerendstelle gemäß Fig. 1 weist eine Steuereinrichtung 1, einen Kurzwahlspeicher 2, eine Wahlwiederholspeicher 3, einen Referenzspeicher 5 und einen diese miteinander verbindenden Datenbus 4 auf. Bei jeder Eingabe einer Rufnummer mittels einer Wähleinrichtung 6 (direkte Wahleingabe) wird mittels der Steuereinrichtung 1 (z.B. PCD 33 43 von Valvo) überprüft, ob der Benutzer bei der Rufnummerneingabe eine Wahlpause einfügt und falls dies der Fall ist wird die Rufnummernfolge einschließlich Wahlpausenlänge im Referenzspeicher 5 dann abgespeichert, wenn die Rufnummernfolge (Referenzmuster) im Referenzspeicher 5 noch nicht vorhanden ist. Ist diese vorhanden, so wird gegebenenfalls die Pausenlänge (d.h. die Pausenkennung) korrigiert und der Zählerstand erhöht (vgl. Beschreibung der Fig. 2). Wird nachfolgend eine Registerwahl, z.B. eine Kurzwahl, durchgeführt, so wird vom Benutzer die Kurzwahlnummer mittels der Wähleinrichtung 6 eingegeben und anhand dieser Adresse (Kurzwahlnummer) wird die im Kurzwahlspeicher 2 unter dieser Adresse stehende Rufnummer ausgelesen und der Steuereinrichtung 1 zugeführt.

Die Steuereinrichtung 1 vergleicht die zugeführte Rufnummer ziffernweise mit den im Referenzspeicher 5 aufgenommenen Wahlziffernfolgen. Tritt in der vom Referenzspeicher 5 und der aus dem Kurzwahlspeicher 2 ausgelesenen gleichen Ziffernfolge eine Pausenkennung auf, so fügt die Steuereinrichtung 1 die Wahlpause an dieser Stelle ein und fährt im Vergleich mit der nachfolgenden Ziffer der zugeführten Rufnummer aus dem Kurzwahlspeicher 2 fort. Im Gegensatz zu bekannten Verfahren braucht der Benutzer beim Programmieren der Register (z.B. Kurzwahlspeicher) nicht mehr zu wissen, an welcher Stelle eine Wahlpause einzufügen ist und beispielsweise eine spezielle Wahlpausentaste zu drücken.

Im Referenzspeicher 5 werden für jede Rufnummer die Wahlziffern, Wahlpause und mindestens ein Gewichtungsfaktor
gespeichert. Als Steuereinrichtung 1 wird vorzugsweise
ein Mikroprozessor benutzt, welcher in ansich bekannter
Weise zur Steuerung von Anzeigeeinrichtungen, Wähleinrichtung 6, und der jeweiligen Speicher 2, 3 und 5 in
Abhängigkeit von am Tastenfeld eingegebenen Bedienungsfunktionen dient.

Anhand des Ablaufdiagramms gemäß Fig. 2 wird die
Speicherprozedur im folgenden näher beschrieben und erläutert. Nachdem der Benutzer den Handapparat abgenommen
und die erste Ziffer gewählt hat, wird im Referenzspeicher 5 jene Rufnummer mit dem niedrigsten Referenz-
Zählerstand gelöscht und die gewählte Wahlziffer dort
eingetragen. Dann folgt ein Vergleich der Wahlziffer mit
an gleicher Stelle im Referenzspeicher 5 stehenden
Ziffer. Ist die Wahlziffer bereits vorhanden und eine
Pause an gleicher Stelle eingetragen, so wird der zugehörige Zählerstand hochgezählt und gegebenenfalls die
Pausenlänge korrigiert. Die Erhöhung des Zählerstandes
kann um eins oder entsprechend der Anzahl von Übereinstimmungen erfolgen.

Ist eine übereinstimmende Wahlziffernfolge noch nicht im
Referenzspeicher 5 vorhanden und es wird eine Pause
dedektiert, so wird der Zählerstand der betreffenden Rufnummer auf einen bestimmten Wert hochgesetzt und die Rufnummer im Referenzspeicher 5 markiert. Das Löschen nicht
mehr benötigter, im Referenzspeicher 5 aufgenommener Rufnummer kann auf einfache Art und Weise dadurch erreicht werden, indem bei übereinstimmender Zifferfolge der betreffende Zählerstand erhöht und die anderen Zählerstände erniedrigt werden.

Die Steuereinrichtung 1 mißt bei jeder Eingabe einer Rufnummer die auftretende Pausenlänge und vergleicht diese mit der Pausenlänge (Pausenkennung) der im Referenzspeicher 5 gespeicherten Rufnummer. Eine Korrektur der gespeicherten Pausenlänge kann durch stufenweises Verkürzen oder Verlängern erfolgen und bei einer Pausenlänge kleiner einer vorgebbaren Länge wird die Rufnummer im Referenzspeicher 5 gelöscht.

Durch das erfindungsgemäße Verfahren wird der Referenzspeicher 5 auf einfache Art und Weise an das Wahlverhalten des Benutzers angepaßt.

Philips Patentverwaltung GmbH

N.V. Philips'Gloeilampenfabrieken

PHD 85 307 EP

18.12.1985

Patentansprüche

1. Verfahren zur Einfügung von Wahlpausen zwischen gespeicherten Wahlziffern, bei dem die Pausenlänge gemessen, dieser eine Pausenkennung zugeordnet und mittels der gespeicherten Pausenkennung die Einfügung unterschiedlicher Pausenlängen bewirkt wird, dadurch gekennzeichnet, daß bei jeder vom Benutzer getätigten Eingabe von Rufnummern mittels einer Wähleinrichtung (6) in einem Referenzspeicher (5) nur solche Rufnummern gespeichert werden, welche mindestens eine zwischengefügte Wahlpause aufweisen, daß bei einer nachfolgenden Registerwahl (z.B. Wahlwiederholung, Kurzwahl usw.) mittels einer Steuereinrichtung (1) wahlziffernweise überprüft wird, ob übereinstimmende Wahlziffernfolgen bereits im Referenzspeicher (5) gespeichert sind und daß bei Übereinstimmung die Steuereinrichtung (1) anhand der im Referenzspeicher (5) gespeicherten Pausenkennung an gleicher Stelle die Wahlpause einfügt.

2. Verfahren nach Anspruch 1, dadurch gekennzeichnet, daß zur Löschung gespeicherter Rufnummern die Anzahl der Übereinstimmungen für jede in Referenzspeicher (5) aufgenommene Rufnummer gezählt wird, daß die gespeicherten Zählerstände miteinander verglichen werden und daß die Rufnummer mit dem niedrigsten Zählerstand gelöscht wird.

3. Verfahren nach Anspruch 2, <u>dadurch gekennzeichnet</u>, daß bei übereinstimmender Wahlziffernfolge der betreffende Zählerstand erhöht und die anderen Zählerstände erniedrigt werden.

4. Verfahren nach Anspruch 1, <u>dadurch gekennzeichnet</u>, daß die Steuereinrichtung (1) bei jeder Eingabe einer Rufnummer die Pausenlänge mißt, die gemessene Pausenlänge mit der Pausenlänge der im Referenzspeicher (5) gespeicherten Rufnummern vergleicht und in Abhängigkeit davon die Pausenkennung (gespeicherte Pausenlänge) korrigiert.

5. Verfahren nach Anspruch 4, <u>dadurch gekennzeichnet</u>, daß im Referenzspeicher (5) nur Rufnummern ab einer vorgebbaren Pausenlänge gespeichert werden.

6. Verfahren nach Anspruch 4, <u>dadurch gekennzeichnet</u>, daß die Korrektur der Pausenlänge durch deren stufenweises Verkürzen oder Verlängern erfolgt und bei einer Pausenlänge kleiner der vorgebbaren Länge die Rufnummer im Referenzspeicher (5) gelöscht wird.

7. Schaltungsanordnung zur Durchführung des Verfahrens nach Anspruch 1, bei einer Teilnehmerendstelle mit einer Steuereinrichtung (1), einem Kurzwahlspeicher (2), einem Wahlwiederholspeicher (3) und einem diese miteinander verbindenden Datenbus (4), <u>dadurch gekennzeichnet</u>, daß ein Referenzspeicher (5) vorgesehen ist, welcher mit dem Datenbus (4) verbunden ist und in welchem Rufnummerweise Wahlziffern, Wahlpause und mindestens ein Gewichtungsfaktor gespeichert sind und daß als Steuereinrichtung (1) ein Mikrocomputer verwendet wird, der mit einer Wähleinrichtung (6) verbunden ist und bei der Eingabe von Wahlziffernfolgen über die Wähleinrichtung (6) die auftretenden Pausenlängen mißt.

0194709

FIG.1

0194709

OFF — HOOK  —2-1

INSRT NW NR  —2-2

COMP. NR.  —2-3

SEQ. STORED  2-4  N

PAUSE MARKED  2-7  N

Y

INCR. RC, I  —2-5

2-8

INCR. RC, I

DECR RC ≠ I  —2-6

ON — HOOK  —2-9

## FIG. 2